# EUROPEAN PATENT SPECIFICATION

(11) **EP 1 380 741 B1**
(45) Date of publication and mention of the grant of the patent: **30.05.2012**
(21) Application number: 02015439.9
(22) Date of filing: 11.07.2002
(51) Int. Cl.: F02D 9/10, F16K 1/22

(54) **Throttle device**
Drosselklappen-Einrichtung
Dispositif d'étranglement

(43) Date of publication of application: 14.01.2004
(73) Proprietor: Volvo Car Corporation, 405 31 Göteborg (SE)
(72) Inventor: Mullerström, Oscar, 423 40 Göteborg (SE)
(74) Representative: Spitmann, Knut Hermann

(56) References cited:
- EP-A- 0 861 977
- GB-A- 1 061 651
- US-A- 2 529 572
- US-A- 4 943 404
- US-A- 5 342 019
- US-A- 5 813 380
- US-A- 5 996 549
- PATENT ABSTRACTS OF JAPAN vol. 1997, no. 10, 31 October 1997 (1997-10-31) & JP 09 151816 A (NOK CORP), 10 June 1997 (1997-06-10)

## Description

### TECHNICAL FIELD

The present invention is directed to a throttle device for an internal combustion engine and to a method for assembling the throttle device and mounting it in an engine.

### BACKGROUND

In internal combustion engines there is usually a throttle system that responds to accelerator pedal signals and controls the flow of air or air/fuel mixture through an inlet into the cylinders where the combustion takes place. There are engines with just a main throttle common to all cylinders, and there are also engines with throttle systems comprising one throttle in the inlet passage of each individual cylinder. There are also solutions which combines a main throttle with individual throttles for each cylinder. In internal combustion engines it is important to obtain a homogeneous air/fuel mixture in the cylinders in order to obtain efficient combustion and reduced exhaust emissions. Especially in diesel engines this can be achieved by using swirl throttle systems affecting flow speeds in the inlet channels of the engine. Emission requirements at low load and low engine speeds constitutes a challenge to car producers to reduce particle emissions in diesel engines. Configuration and operational properties of a swirl throttle system can be tuned to perform as good swirl properties as possible for different engine load situations. For example, in a maximum load situation with fully open throttle/throttles a pressure drop as low as possible is desirable in order to improve performance of the engine. In low duty situations on the other hand, pressure drop is not a big problem so in this case it is more important to obtain sufficient swirl in the cylinders also at low total flow rates.

US 5996549 discloses an inlet arrangement for a multi-cylinder internal combustion engine. This arrangement comprises a pivot axle on which one control flap for each of the cylinders is mounted. The control flaps are positioned within the inlet passages of the cylinders and pivotable by means of the pivot axle. The control flaps are provided with recesses adjacent to their circumference in order to improve swirl properties of the inlet arrangement. The pivot axle on which control flaps are mounted has a generally circular cross section which implies that control flaps be quite thick and thereby cause a relatively high pressure drop across the inlet arrangement in fully open position. Therefore, in order to improve performance of the engine, there is a need for an inlet arrangement with a throttle device that ensures a very low pressure drop in fully open position. There is also room for improvements of this inlet arrangement from a cost, modularity and recyclability standpoint.

EP 0861977 discloses a throttle valve device for an internal combustion engine wherein one duct of a two-duct intake manifold for each cylinder is provided with a throttle valve. Adjusting pins are attached to the throttle valves by means of screws and threaded bores inside each throttle valve. A lever connects the adjusting pins for operating the throttle valves simultaneously. The assembling and mounting of this device is complicated and time consuming. The throttle valves are also quite thick and the cross section of the throttle valves is not optimized with respect to flow resistance in the inlet duct.

US 5342019 relates to a throttle flap construction having separate axle studs mounted at the end portions of a disc. The disc is introduced at recesses in the axle studs. The axle studs protrudes into the gas channel and will therefore give rise to an undesired pressure drop over the valve construction. The construction of the throttle flap does furthermore not admit easy assembly of a plurality of discs on a common axis.

### SUMMARY OF THE INVENTION

An object of present invention is to provide a throttle device that is easy and cost efficient to assemble. It is a further object of present invention to provide a throttle device which is easy to disassemble and which enables the separation of parts of different materials for recycling or destruction and which throttle device thereby would be environmentally advantageous. It is a further object of present invention to provide a throttle device that ensures a low pressure drop caused by the throttle plates in their fully open state and thereby improves the performance of the engine. It is still a further object of present invention to provide a throttle system for improved swirl properties of an internal combustion engine and thereby reducing exhaust emissions, especially soot particles in diesel engines. It is a further object of the invention to provide a modular throttle system whose parts can be shared among a plurality of engines, for maximum economics of scale. It is also an object of present invention to provide a method for assembling a throttle device in a rational and cost efficient manner.

According to present invention the objects above are obtained by a throttle device for an internal combustion engine, comprising at least one throttle plate for controlling the flow of a medium through an inlet passage into a combustion chamber, and at least one slide bearing rotatably supporting said throttle plate at said inlet passage, said slide bearing comprising an outer portion and an inner portion, the outer and the inner portions being rotatably attached to each other, wherein the inner portion of said slide bearing is formed by an essentially cylindrical surface at a first end portion of said throttle plate.

According to the invention the throttle plate of the engine is provided with a hole extending from a first end portion of the throttle plate through the center of said throttle plate to a second end portion of said throttle plate. The throttle device further comprises a shaft for rotatably actuating said throttle plate, wherein the shaft and the hole have similar cross sections, and where the shaft is arranged inside the hole of the throttle plate. This is easily enabled by sliding-on engagement of throttle plate and shaft.

The invention also provides an internal combustion engine comprising a throttle device as described above.

An advantage of the present invention in comparison to the inlet arrangement of US 5996549 is that the cross section of the throttle plates can be reduced, resulting in a reduced flow resistance and thereby a reduced pressure drop across the throttle plate. A reduced cross section of throttle plate and shaft also provides a higher degree of freedom to design a more optimised shape of the throttle plate. For example, the throttle plate can be given a guide vane shape or a wing shape optimised for further improvement of flow properties in the inlet passage and in the entry into the cylinders of the engine. Furthermore the use of axle studs or shafts which externally engage a disc and which shaft and axle stud therefore protrudes into the gas channel, as is used for example in the throttle flap construction described in US5342019, may be avoided by use of a throttle plate which is provided with a hole extending from a first end portion through the center of said throttle plate to a second end portion of said throttle plate and a shaft havinga similar cross sections as the hole arranged inside the hole of the throttle plate.

The medium whose flow is controlled by the throttle plate is preferably air or a mixture of air, fuel, EGR(Exhaust Gas Recycling)-gases, crankcase gases, or collected fuel evaporations.

The present invention also provides a method for assembling a throttle device for an internal combustion engine, wherein the throttle device comprises at least one throttle plate for controlling the flow of a medium through at least one inlet passage into a combustion chamber of the engine, at least one throttle plate slide bearing rotatably supporting the throttle plate at said inlet, a shaft with a non-circular cross section for actuating said throttle plate, comprising the steps of:
a) attaching an outer portion of said slide bearing onto an essentially cylindrical surface acting as an inner portion of said slide bearing at a first end portion of said throttle plate,
b) sliding said throttle plate onto the shaft by engaging an inner surface of a hole through the throttle plate to an outer surface of said shaft,
c) mounting the throttle device in the engine.

In a preferred embodiment of the inventive method steps a) and b) above are repeated for additional throttle plates. Preferably one throttle plate for each cylinder of the engine would be slid onto the shaft, each throttle plate controlling the flow of air through the inlet passage into one cylinder.

Mounting the throttle device in the engine preferably, but not necessarily, also comprises the step of positioning each throttle plate at its respective cylinder inlet runner in the cylinder head of the engine. This is easily done since the throttle plates with bearings are displaceable along the shaft prior to mounting into the cylinder head. The inventive method thereby also provides an opportunity to compensate for tolerances in the positioning of the individual inlet passages or inlet runners. Tool costs can also be reduced by this method.

The inventive throttle device possesses high flexibility since it can be used in many different kinds of engines regardless of numbers of cylinders, inlet passages and throttle plates. Different requirements on numbers of throttle plates and bearings are easy to fulfil by means of the inventive throttle device. The modularity of the throttle device also reduces costs for assembling and increases recyclability.

### BRIEF DESCRIPTION OF THE DRAWINGS

- Figure 1a shows a perspective view of a throttle plate.
- Figure 1b shows a cross section of the throttle plate of Figure 1a.
- Figure 2a shows a throttle plate with bearing parts mounted on its ends.
- Figure 2b shows an end view of the throttle plate with bearing parts of Figure 2a.
- Figure 3 shows the throttle plate of Figure 2a mounted on a manoeuvring shaft.
- Figure 4 shows a modular swirl throttle device comprising five throttle plates.
- Figure 5 shows the modular throttle device of Figure 4 mounted into a cylinder head.
- Figure 6 shows an auxiliary profile for pre-mounting of the modular throttle device of Figure 4.
- Figure 7 shows an alternative embodiment of an auxiliary profile for pre-mounting of the modular throttle device of Figure 4.
- Figure 8 shows a throttle plate with bearings pre-mounted in an auxiliary profile.
- Figure 9 shows an end view of the pre-mounted throttle plate, bearing, and auxiliary profile of Figure 8.
- Figure 10 shows a throttle plate with alternative bearing parts mounted on its ends.
- Figure 11 shows a throttle plate with further alternative bearing parts mounted on its ends.

### DETAILED DESCRIPTION OF PREFERRED EMBODIMENTS

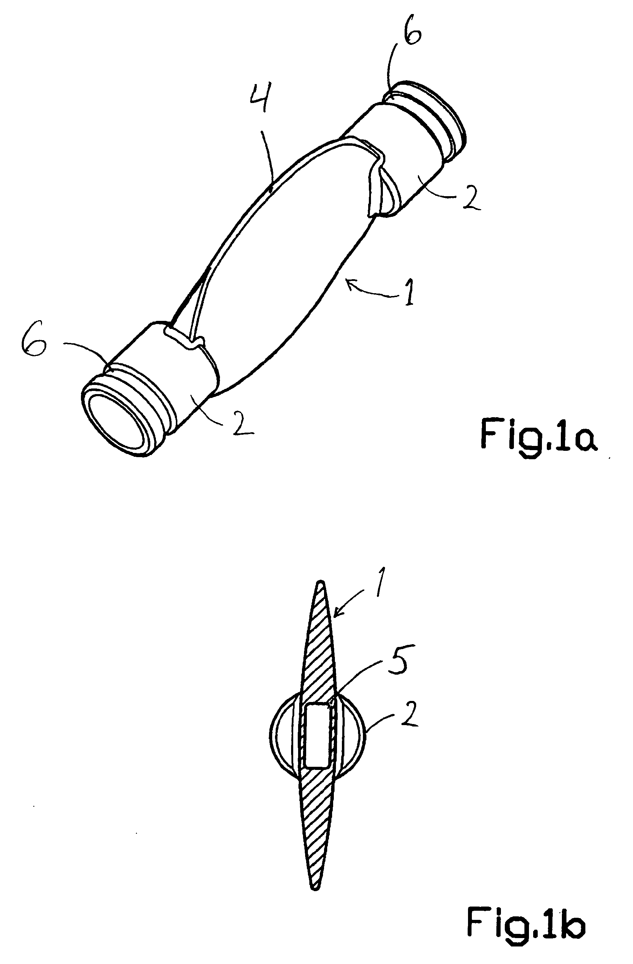

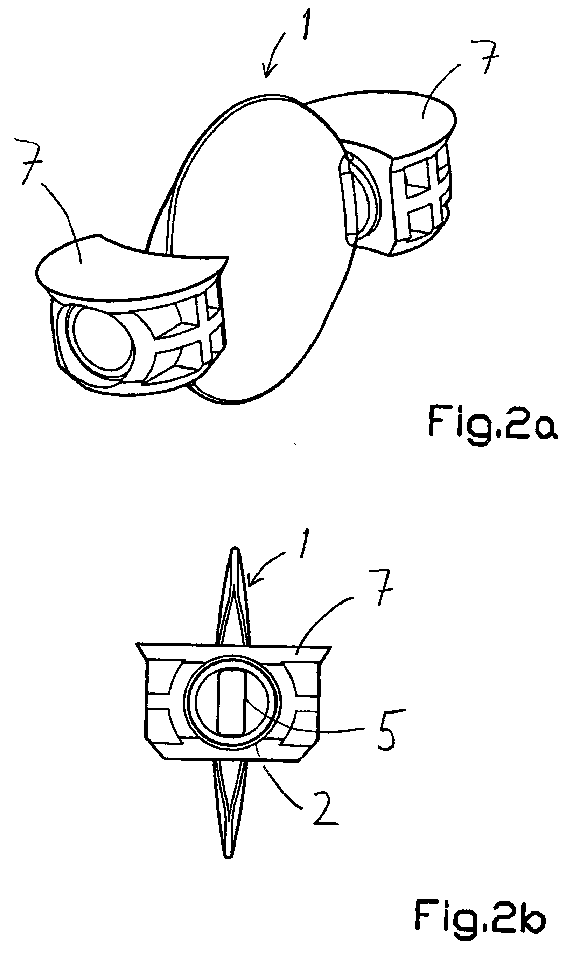

Figure 1a shows a throttle plate 1 having two essentially cylindrical opposite end portions 2. In this embodiment the circumference 4 of throttle plate 1 is circular so as to fit into the inlet passage of an engine. Throttle plate 1 is provided with a hole 5 (Figure 1b that has a non-circular cross section. End portions 2 on the other hand, have essentially circular cross sections. The longest cross section dimension of hole 5 is preferably smaller than the inner diameter of end portions 2 so that it is possible to slide the throttle plate 1 onto a shaft that engages the hole 5. The cross section of hole 5 is preferably elongated in a lateral direction of the actual throttle plate 1, while it is narrow in the thickness direction of the throttle plate 1. This makes it possible to design a thin throttle plate even though it is hollow, and thereby flow resistance and pressure drop over the throttle plate when fully open at maximum engine load is reduced. In Figure 1b the cross-section of the hole 5 is essentially rectangular but many other cross sections are of course possible in order to achieve a thin throttle plate cross section. On the outer surfaces of end portions 2 there are a grooves 6 for enabling snap-on fixation of bearing parts 7 shown in Figure 2a. Throttle plate 1 is preferably made of a ceramic or a moulded polymer material e.g. PPS (PolyPhenylene Sulphide). Throttle plate 1 and its end portions 2 are preferably made in one piece.

Figure 2a shows how slide bearing parts 7 are mounted onto the throttle plate 1 of Figure 1a. Bearing parts 7 are snapped onto end portions 2 of the throttle plate 1 and retained by groves 6. In this way the outer surface of the end portion 2 together with the inner surface of the bearing part 7 constitutes a slide bearing function, allowing rotation of throttle plate 1. Bearing parts 7 are preferably made of a ceramic or moulded polymer material e.g. PPS.

An end view of throttle plate 1 with bearing part 7 mounted on its end portion 2 is shown in Figure 2b. The exterior of bearing part 7 is designed to fit into mounting cavities in a cylinder head of an internal combustion engine, while an inner diameter of bearing part 7 is adapted to engage with the essentially cylindrical end portions 2 of throttle plate 1. In this way a bearing functionality is formed, which allows the throttle plate 1 to rotate around a symmetry axis which preferably also constitutes the center line of hole 5.

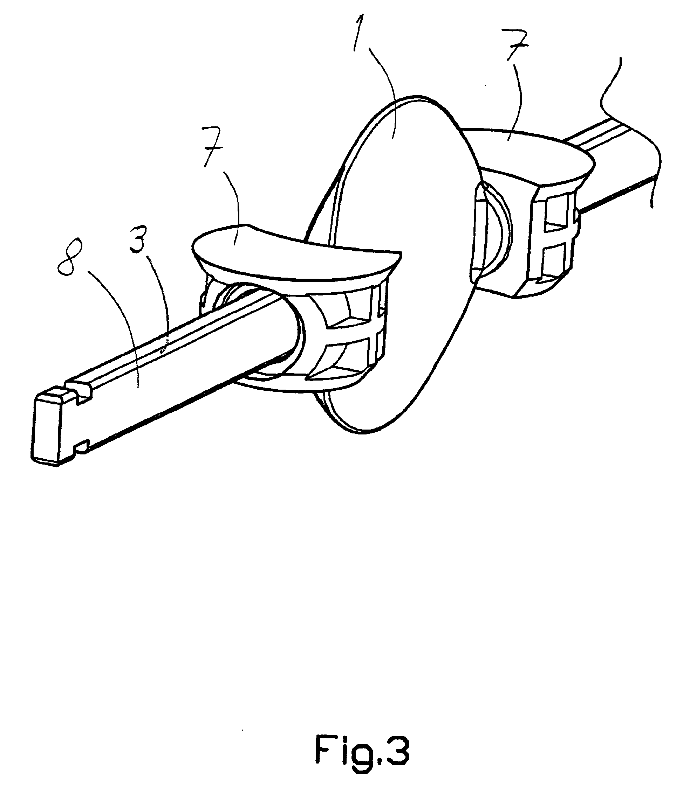

Figure 3 shows a throttle plate 1 mounted with bearing parts 7 and a shaft 8 for manoeuvring the throttle plate 1. Shaft 8 has an essentially rectangular cross section engaged with hole 5 of throttle plate 1 by sliding throttle plate 1 onto shaft 8. The essentially rectangular cross section of shaft 8 has the advantage of allowing a thin throttle plate being used in order to reduce flow resistance caused by said throttle plate. Shaft 8 is preferably made of a metallic material, machined to its final shape or solid drawn to its final shape.

The shaft is preferably provided with beveled edges 3, as is preferbly also the hole 5.

At this stage it should also be mentioned that the throttle plates and the shaft would preferably be interference fitted to each other so that the throttle plates are displacable with some resistance. That is, there will be a certain force needed to slide a throttle plate on the shaft which makes the device more easy to handle prior to mounting into a cylinder head.

Instead of using a close interference fit, small roughnesses inside the throttle plate hole 5 can be produced during throttle plate manufacturing, ensuring some friction when displacing a throttle plate on the shaft.

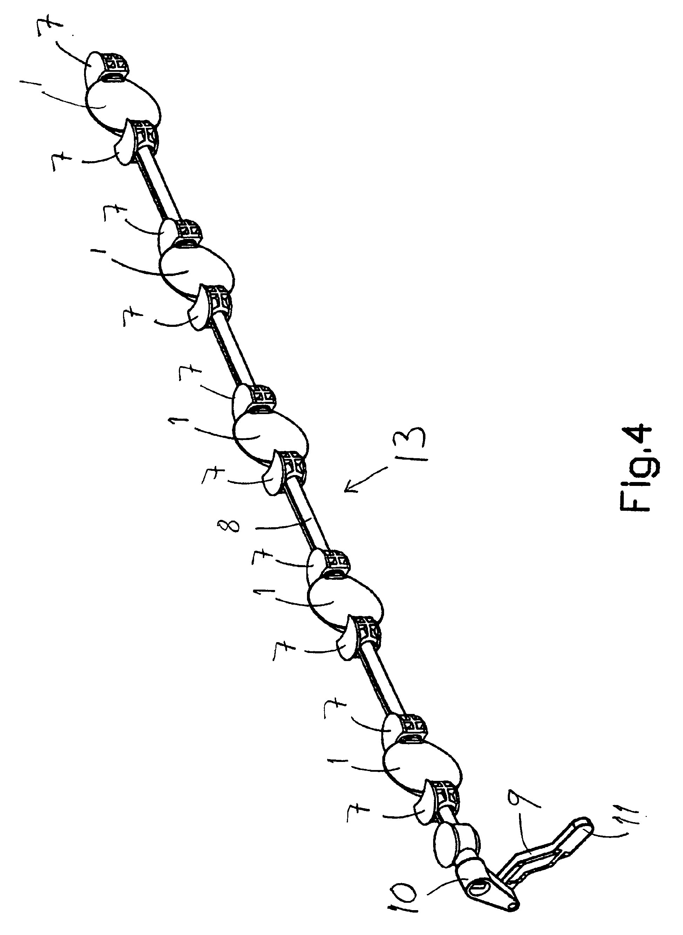

Figure 4 shows a preferred embodiment of present invention in which several throttle plates 1 with bearing parts 7 are slid onto shaft 8. In this case five throttle plates 1 are used, one for each inlet of the cylinders of a five-cylinder internal combustion engine. Shaft 8 simultaneously manoeuvres all throttle plates 1. A modular throttle device like this is easily adapted to different engines depending on the number of cylinders. The modular throttle device further comprises a lever 9 having two ends, a first end 10 affixed to the shaft 8 and a second end 11 connected to an actuator (not shown in Figure 4) for manoeuvring the shaft. Lever 9 is preferably adapted for snap-on mounting onto one end the shaft 8. Lever 9 is preferably made of a moulded polymer material e.g. PPS.

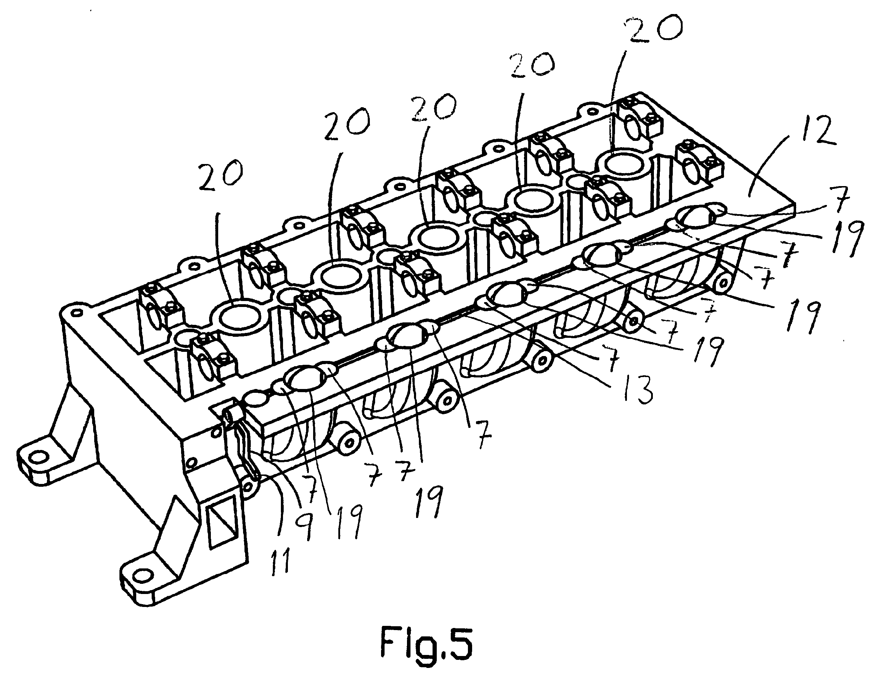

Figure 5 shows a cylinder head 12 of an internal combustion engine and a modular throttle device 13 mounted in the cylinder head by positioning of the bearing parts 7 in corresponding recesses in the cylinder head 12. The modular throttle device 13 is assembled in accordance with Figure 4. An actuator (not shown) is connected to the second end 11 of lever 9. In this way the flow of air into the cylinders as well as the swirl in the cylinders are controlled by an actuator (not shown) via lever 9 and shaft 8 simultaneously manoeuvring five throttle plates 1. Bearings parts 7 support modular throttle device 13 at the cylinder head 12 close to the inlet passages of the cylinders.

The actuator may be of the electric, pneumatic or hydraulic type. The actuator could be connected to an engine control unit which reads the position of an accelerator pedal by means of a sensor. Alternatively, the actuator may also be excluded and lever 9 would in this case have a direct connection to the accelerator pedal.

The modular throttle device 13 does not have to be mounted in a cylinder head as shown in Figure 5, but can instead be mounted in an inlet manifold or in a throttle body of the engine.

For multicylinder engines with an inlet passage for each cylinder, the present throttle device preferably comprises one throttle plate 1 for each cylinder.

In a further preferred embodiment of present invention, as shown in Figure 5, each inlet passage is split into two inlet runners for each cylinder wherein just one of the inlet runners for each cylinder is provided with a throttle plate. Throttled inlet runners are designated reference numeral 19 while un-throttled inlet runners are designated reference numeral 20 in Figure 5. This means that each cylinder has one inlet runner that is not affected by any throttle plate inside it, and hence is always fully open, and one inlet runner that is controlled by the modular throttle device 13 shown in Figure 5. In this way the swirl properties of the engine is optimised. In low load situations the inlet runners provided with throttle plates are substantially closed while the other inlet runners are fully open. Since the flow speed in the inlet runners that have no throttle plates is still relatively high excellent swirl is achieved even at low total flow rates.

In intermediate load and intermediate engine speed situations, throttle plate angles can be continuously controlled depending on current engine torque demands.

At maximum load and high engine speeds the engine performance takes great advantage of the thin and smooth throttle plates of present throttle device.

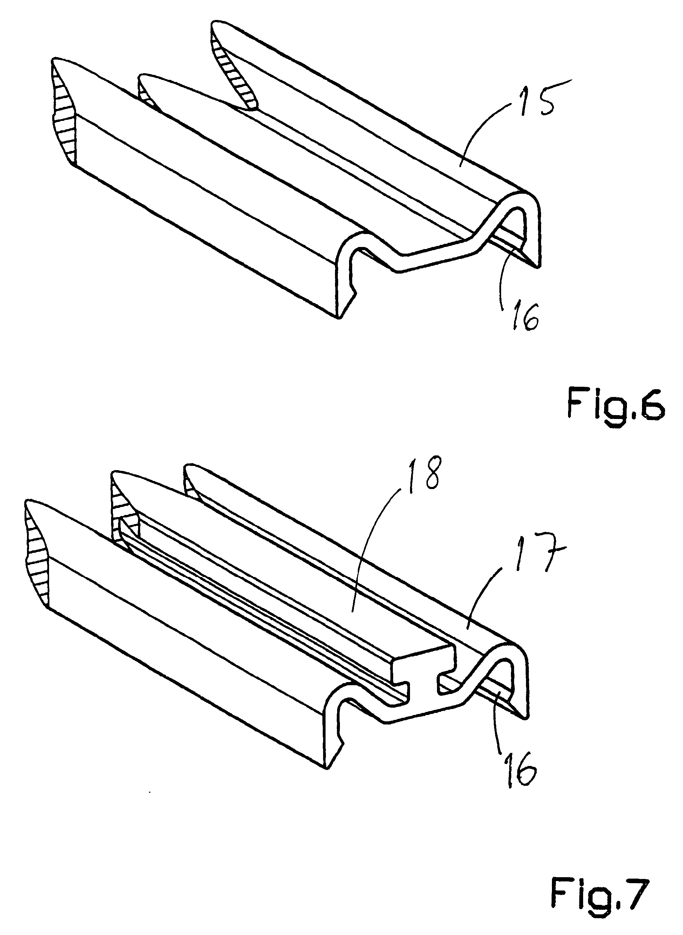

In a preferred embodiment, mounting of the modular throttle 13 device of Figure 4 in an engine is performed by using an auxiliary profile 15, 17 shown in Figures 6 and 7, respectively. Auxiliary profiles 15, 17 are provided with flanges 16 for pre-mounting of bearing parts 7 prior to mounting the throttle device in the engine. Thereby, bearing parts 7 are inhibited to rotate during the mounting of the throttle device in the engine. Auxiliary profiles 15, 17 are easily removed from the bearing parts 7 of the modular throttle device 13 when it is positioned in the engine. For example, said auxiliary profiles 15, 17 can be slid off the bearing parts 7.

Auxiliary profile 17 of Figure 7 is provided with an extending portion 18 for easier handling by an operator.

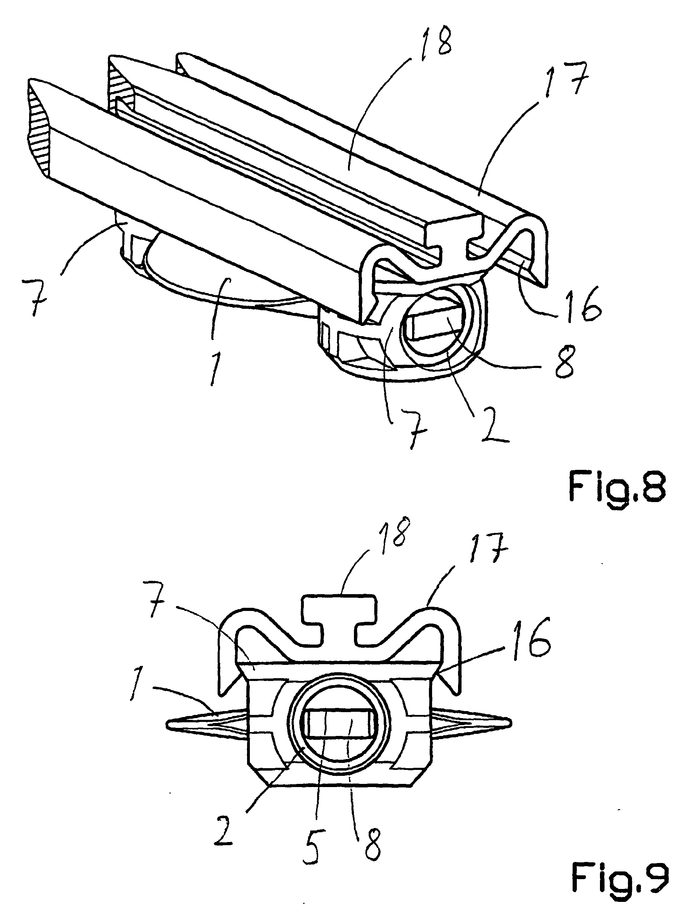

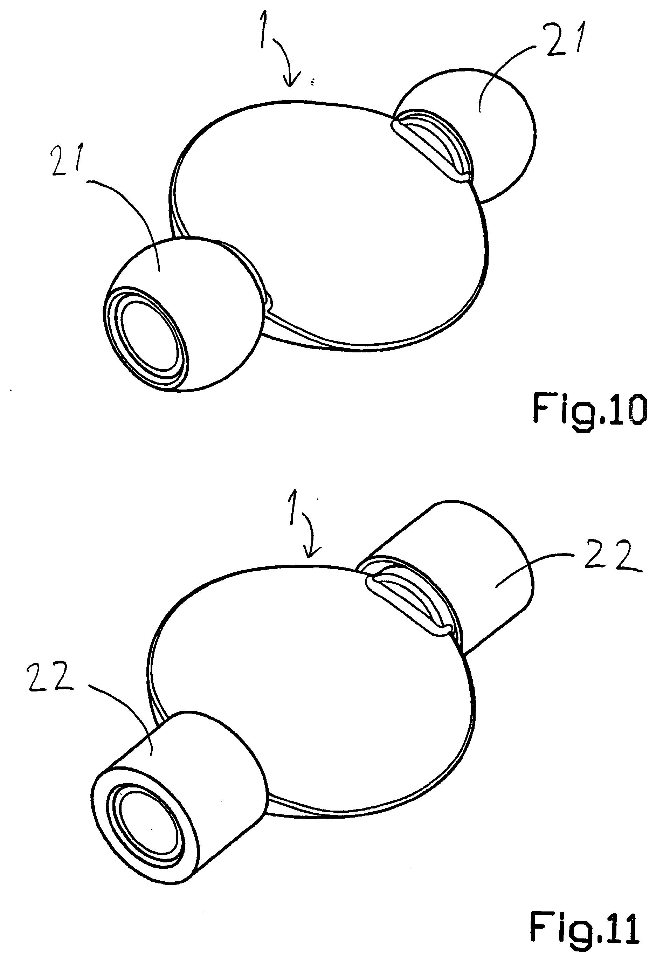

Figures 8 and 9 show a throttle device pre-mounted in an auxiliary profile 17. Bearing parts 7 are first snapped onto the end portions 2 of the throttle plates 1, then the throttle plates 1 are slid onto the shaft 8 by means of the hole 5 through the throttle plates 1, and then finally, the bearing parts 7 are mounted on the auxiliary profile 17 by means of the flange 16. Figure 10 discloses an alternative embodiment comprising a bearing parts 21 with partially spherical outer surfaces. Figure 11 discloses an alternative embodiment comprising a bearing parts 22 with essentially cylindrical outer surfaces. Each of these two embodiments makes it easy to mount the throttle device in an engine without having to care about bearing part rotation during mounting. Auxiliary profiles 15, 17 will in this case not be used. Cylindrical or spherical bearing parts may accidentally rotate slightly in their mounted position in the engine which is not a problem since this does not affect the operation of the throttle plates which are journalled in the bearings anyway.

The invention is not restricted to engines having separate throttles for each cylinder but can also be used in an internal combustion engine having a main throttle for all cylinders and no individual throttles for each cylinder.

Further, a throttle device as described above could also be used for exhaust throttling which increases engine load in order to get an earlier catalyst light off during cold starts.

## Claims

1. Throttle device for an internal combustion engine, comprising at least one throttle plate (1) for controlling the flow of a medium through an inlet passage into a combustion chamber, and at least one slide bearing (7,21,22) rotatably supporting said throttle plate (1) at said inlet passage, said slide bearing (7,21,22) comprising an outer portion and an inner portion, the outer and the inner portions being rotatably attached to each other, **characterized in that** the inner portion of said slide bearing (7,21,22) is formed by an essentially cylindrical surface at a first end portion (2) of said throttle plate (1), that said throttle plate (1) is provided with a hole (5) extending from said first end portion (2) through the center of said throttle plate (1) to a second end portion (2) of said throttle plate (1), and that a shaft (8) for rotatably actuating said throttle plate (1), which shaft (8) and hole (5) have similar cross sections, is arranged inside the hole (5) of the throttle plate (1).

2. A throttle device according to claim 1, **characterized in that** the hole (5) and the shaft (8) have non-circular cross sections.

3. A throttle device according to claim 2, **characterized in that** the hole (5) and the shaft (8) have essentially rectangular cross sections.

4. A throttle device according to any one of claim 1-3, **characterized in that** said shaft (8) is made of a metallic material and said throttle plates (1) and bearings (7,21,22) are made of a moulded polymer material e.g. PPS, or a ceramic material.

5. A throttle device according to any one of claim 1-4, **characterized in that** the throttle device (1) further comprises a lever (9) having two ends (10,11), one end (10) affixed to the shaft (8) and the other end (11) connected to an actuator for manoeuvring the shaft (8).

6. A throttle device according to any one of the claim 1-5, **characterized in that** the throttle device comprises a second slide bearing (7,21,22) at said second end portion (2) of said throttle plate (1) opposite to said first end portion (2).

7. A throttle device according to any one of claims 1 - 6, **characterised in that** the throttle plate (1) and its end portions (2) are made in one piece

8. An internal combustion engine comprising a throttle device according to any one of claims 1-7.

9. A method for assembling a throttle device (13) for an internal combustion engine, wherein the throttle device comprises at least one throttle plate (1) for controlling the flow of a medium through at least one inlet passage into a combustion chamber of the engine, at least one slide bearing (7,21,22) rotatably supporting the throttle plate (1) at said inlet passage, a shaft (8) with a non-circular cross section for actuating said throttle plate (1), comprising the steps of:
a) attaching an outer portion of said slide bearing (7,21,22) onto an essentially cylindrical surface acting as an inner portion of said slide bearing (7,21,22) at a first end portion (2) of said throttle plate (1),
b) sliding said throttle plate (1) onto the shaft (8) by engaging an inner surface of a hole (5) through the throttle plate (1) to an outer surface of said shaft (8),
c) mounting the throttle device (13) in the engine.

10. A method according to claim 9, **characterised in that** the metod steps a) and b) includes the following steps:
bearing parts (7) are first snapped onto the end portions (2) of the throttle plates (1), then the throttle plates (1) are slid onto the shaft 8 by by engaging an inner surface of a hole (5) through the throttle plate (1) to an outer surface of said shaft (8).

11. Method according to claim 10, **characterised in that** the method further includes the step of mounting the bearing parts (7) on an auxiliary profile (15, 17) before step c) is performed.

## Patentansprüche

1. Drosseleinrichtung für einen Verbrennungsmotor, umfassend: mindestens eine Drosselklappe (1) zur Steuerung des Stroms eines Mediums durch einen Einlasskanal in eine Brennkammer und mindestens ein Gleitlager (7, 21, 22), das die Drosselklappe (1) an dem Einlasskanal drehbar stützt, wobei das Gleitlager (7, 21, 22) einen Außenteil und einen Innenteil umfasst, wobei der Außen- und der Innenteil drehbar aneinander befestigt sind, **dadurch gekennzeichnet, dass** der Innenteil des Gleitlagers (7, 21, 22) durch eine im Wesentlichen zylindrische Fläche an einem ersten Endteil (2) der Drosselklappe (1) gebildet wird, die Drosselklappe (1) mit einem Loch (5) versehen ist, das von dem ersten Endteil (2) durch die Mitte der Drosselklappe (1) zu einem zweiten Endteil (2) der Drosselklappe (1) verläuft, und eine Welle (8) zur Drehbetätigung der Drosselklappe (1), wobei die Welle (8) und das Loch (5) ähnliche Querschnitte aufweisen, in dem Loch (5) der Drosselklappe (1) angeordnet ist.

2. Drosseleinrichtung nach Anspruch 1, **dadurch gekennzeichnet, dass** das Loch (5) und die Welle (8) nicht kreisförmige Querschnitte aufweisen.

3. Drosseleinrichtung nach Anspruch 2, **dadurch gekennzeichnet, dass** das Loch (5) und die Welle (8) im Wesentlichen rechteckige Querschnitte aufweisen.

4. Drosseleinrichtung nach einem der Ansprüche 1 - 3, **dadurch gekennzeichnet, dass** die Welle (8) aus einem metallischen Material hergestellt ist und die Drosselklappen (1) und die Lager (7, 21, 22) aus einem geformten Polymermaterial, zum Beispiel PPS, oder einem Keramikmaterial hergestellt sind.

5. Drosseleinrichtung nach einem der Ansprüche 1 - 4, **dadurch gekennzeichnet, dass** die Drosseleinrichtung (1) weiterhin einen Hebel (9) mit zwei Enden (10, 11) umfasst, wobei ein Ende (10) an der Welle (8) befestigt ist und das andere Ende (11) mit einem Aktuator zur Betätigung der Welle (8) verbunden ist.

6. Drosseleinrichtung nach einem der Ansprüche 1 - 5, **dadurch gekennzeichnet, dass** die Drosseleinrichtung ein zweites Gleitlager (7, 21, 22) an dem zweiten Endteil (2) der Drosselklappe (1) gegenüber dem ersten Endteil (2) umfasst.

7. Drosseleinrichtung nach einem der Ansprüche 1 - 6, **dadurch gekennzeichnet, dass** die Drosselklappe (1) und ihre Endteile (2) einstückig hergestellt sind.

8. Verbrennungsmotor, der eine Drosseleinrichtung nach einem der Ansprüche 1 - 7 umfasst.

9. Verfahren zur Montage einer Drosseleinrichtung (13) für einen Verbrennungsmotor, wobei die Drosseleinrichtung mindestens eine Drosselklappe (1) zur Steuerung des Stroms eines Mediums durch mindestens einen Einlasskanal in eine Brennkammer des Motors, mindestens ein Gleitlager (7, 21, 22), das die Drosselklappe (1) an dem Einlasskanal drehbar stützt, und eine Welle (88) mit einem nicht kreisförmigen Querschnitt zur Betätigung der Drosselklappe (1) umfasst, das die folgenden Schritte umfasst:
a) Befestigen eines Außenteils des Gleitlagers (7, 21, 22) an einer im Wesentlichen zylindrischen Fläche, die als ein Innenteil des Gleitlagers (7, 21, 22) an einem ersten Endteil (2) der Drosselklappe (1) wirkt,
b) Aufschieben der Drosselklappe (1) auf die Welle (8) durch Ineingriffbringen einer Innenfläche eines Lochs (5) durch die Drosselklappe (1) mit einer Außenfläche der Welle (8),
c) Befestigen der Drosseleinrichtung (13) in dem Motor.

10. Verfahren nach Anspruch 9, **dadurch gekennzeichnet, dass** die Verfahrensschritte a) und b) die folgenden Schritte umfassen:
zunächst Verrasten der Lagerteile (7) mit den Endteilen (2) der Drosselklappen (1), dann Aufschieben der Drosselklappen (1) auf die Welle (8) durch Ineingriffbringen einer Innenfläche eines Lochs (5) durch die Drosselklappe (1) mit einer Außenfläche der Welle (8).

11. Verfahren nach Anspruch 10, **dadurch gekennzeichnet, dass** das Verfahren weiterhin den Schritt des Befestigens der Lagerteile (7) an einem Zusatzprofil (15, 17) vor Durchführung von Schritt c) umfasst.

## Revendications

1. Dispositif d'étranglement pour un moteur à combustion interne, comprenant au moins une plaque d'étranglement (1) pour réguler l'écoulement d'un fluide à travers un passage d'entrée dans une chambre de combustion, et au moins un palier coulissant (7, 21, 22) supportant à rotation ladite plaque d'étranglement (1) au niveau dudit passage d'entrée, ledit palier coulissant (7, 21, 22) comprenant une portion externe et une portion interne, les portions externe et interne étant fixées de manière rotative l'une à l'autre, **caractérisé en ce que** la portion interne dudit palier coulissant (7, 21, 22) est formée par une surface essentiellement cylindrique au niveau d'une première portion d'extrémité (2) de ladite plaque d'étranglement (1), **en ce que** ladite plaque d'étranglement (1) est pourvue d'un trou (5) s'étendant depuis ladite première portion d'extrémité (2) à travers le centre de ladite plaque d'étranglement (1) jusqu'à une deuxième partie d'extrémité (2) de ladite plaque d'étranglement (1), et **en ce qu'**une tige (8) pour actionner de manière rotative ladite plaque d'étranglement (1) est agencée à l'intérieur du trou (5) de la plaque d'étranglement (1), la tige (8) et le trou (5) ayant des sections transversales similaires.

2. Dispositif d'étranglement selon la revendication 1, **caractérisé en ce que** le trou (5) et la tige (8) ont des sections transversales non circulaires.

3. Dispositif d'étranglement selon la revendication 2, **caractérisé en ce que** le trou (5) et la tige (8) ont des sections transversales essentiellement rectangulaires.

4. Dispositif d'étranglement selon l'une quelconque des revendications 1 à 3, **caractérisé en ce que** ladite tige (8) est fabriquée en un matériau métallique et lesdites plaques d'étranglement (1) et lesdits paliers (7, 21, 22) sont fabriqués en un matériau polymère moulé, par exemple du PPS, ou en un matériau céramique.

5. Dispositif d'étranglement selon l'une quelconque des revendications 1 à 4, **caractérisé en ce que** le dispositif d'étranglement (1) comprend en outre un levier (9) ayant deux extrémités (10, 11), une extrémité (10) étant fixée à la tige (8) et l'autre extrémité (11) étant connectée à un actionneur pour manoeuvrer la tige (8).

6. Dispositif d'étranglement selon l'une quelconque des revendications 1 à 5, **caractérisé en ce que** le dispositif d'étranglement comprend un deuxième palier coulissant (7, 21, 22) au niveau de ladite deuxième portion d'extrémité (2) de ladite plaque d'étranglement (1) en face de ladite première portion d'extrémité (2).

7. Dispositif d'étranglement selon l'une quelconque des revendications 1 à 6, **caractérisé en ce que** la plaque d'étranglement (1) et ses portions d'extrémité (2) sont fabriquées d'une seule pièce.

8. Moteur à combustion interne comprenant un dispositif d'étranglement selon l'une quelconque des revendications 1 à 7.

9. Procédé pour assembler un dispositif d'étranglement (13) pour un moteur à combustion interne, le dispositif d'étranglement comprenant au moins une plaque d'étranglement (1) pour réguler l'écoulement d'un fluide à travers au moins un passage d'entrée dans une chambre de combustion du moteur, au moins un palier coulissant (7, 21, 22) supportant à rotation ladite plaque d'étranglement (1) au niveau dudit passage d'entrée, et une tige (8) de section transversale non circulaire pour actionner ladite plaque d'étranglement (1), comprenant les étapes consistant à :
a) fixer une portion externe dudit palier coulissant (7, 21, 22) sur une surface essentiellement cylindrique agissant sous forme de portion interne dudit palier coulissant (7, 21, 22) au niveau d'une première portion d'extrémité (2) de ladite plaque d'étranglement (1),
b) faire glisser ladite plaque d'étranglement (1) sur la tige (8) en engageant une surface interne d'un trou (5) à travers la plaque d'étranglement (1) jusqu'à une surface externe de ladite tige (8),
c) monter le dispositif d'étranglement (13) dans le moteur.

10. Procédé selon la revendication 9, **caractérisé en ce que** les étapes de procédé a) et b) incluent les étapes suivantes :
des parties de palier (7) sont d'abord encliquetées sur les portions d'extrémité (2) des plaques d'étranglement (1), puis les plaques d'étranglement (1) sont glissées sur la tige (8) en engageant une surface interne d'un trou (5) à travers la plaque d'étranglement (1) jusqu'à une surface externe de ladite tige (8).

11. Procédé selon la revendication 10, **caractérisé en ce que** le procédé comporte en outre l'étape consistant à monter les parties de palier (7) sur un profilé auxiliaire (15, 17) avant d'effectuer l'étape c).
